# EUROPEAN PATENT SPECIFICATION

(11) **EP 3 826 452 B1**
(45) Date of publication and mention of the grant of the patent: **07.06.2023**
(21) Application number: 19898996.4
(22) Date of filing: 05.12.2019
(51) Int. Cl.: A01G 9/24, A01G 9/029, A01G 9/08, A01G 9/14, A01G 31/04, A01C 7/06, A01D 34/13, A01G 31/06

(54) **PLANT CULTIVATION SYSTEM AND APPARATUSES THEREFOR**
PFLANZENZUCHTSYSTEM UND VORRICHTUNGEN DAFÜR
SYSTÈME DE CULTURE DE PLANTES ET APPAREILS ASSOCIÉS

(30) Priority: 20.12.2018 FI 20186121
(43) Date of publication of application: 02.06.2021
(73) Proprietor: Amirlatifi, Ali, 33400 Tampere (FI)
(72) Inventor: AMIRLATIFI, Taru, 33400 Tampere (FI); AMIRLATIFI, Nora, 33400 Tampere (FI); AMIRLATIFI, Mona, 33400 Tampere (FI); AMIRLATIFI, Darya, 33400 Tampere (FI); LACHAPELLE, Renée-Claude, 33400 Tampere (FI); AMIRLATIFI, Ali, 33400 Tampere (FI)
(74) Representative: Berggren Oy
(86) International application number: PCT/FI2019/050873
(87) International publication number: WO 2020/128151

(56) References cited:
- EP-A1- 2 540 156
- EP-A1- 3 097 774
- WO-A1-2017/012644
- WO-A1-2017/024353
- WO-A1-2017/030524
- WO-A1-2018/037577
- WO-A2-2014/066844
- CN-A- 105 724 081
- CN-A- 108 391 586
- CN-A- 108 834 497
- DE-A1- 3 404 300
- JP-A- 2001 016 912
- KR-B1- 101 864 353
- US-A- 2 358 000
- US-A1- 2018 132 441

## Description

### Field

The present invention relates to a plant cultivation system and apparatuses therefor.

### Background

US 2018/ 0132441 A1 discloses a hydroponic conveyor system comprising a plurality of conveyor belts stacked vertically in a rack, the conveyor belts forming rows in the rack, with the rack having a plurality of columns, a plurality of seed distributors located in the first column of the rack for distributing seeds onto the plurality of conveyor belts, a hydration system comprising a moveable hydration arm in each row of the rack, each movable arm having a plurality of drippers for dripping water, a plurality of light-emitting diodes in each row of the rack, the light-emitting diodes facilitating photosynthesis, an HVAC system, and an automation control system, wherein the automation control system controls the speed of the conveyor belts and the timing of the hydration system. In this solution, a hopper distributes seeds onto a conveyor belt and thickness of the seeds on the conveyor belt is distributed evenly by a distribution arm following the hopper on the conveyor belt. The distribution arm is height adjustable. The movable hydration arm provides water for the seeds on the belt. At the end of the conveyor belt, sprouts grown from the seeds are dropped to an outfeed conveyor belt for delivery to live stock. The seeds are distributed in two phases, whereby the hopper and distribution arm need to be separately adjusted for desired distribution of seeds on the conveyor belt. Moreover, the distribution of the seeds is affected by advancement of the conveyor belt, which also needs to be considered. Since the sprouts are dropped to the outfeed conveyor belt, the sprouts are in heaps on the outfeed conveyor belt, which makes the sprouts difficult to process in discrete measurable units. Moreover, the hydroponic conveyor system does not support adaptation for cultivation of different species of plants. EP 3 097 774 A1 discloses a plant cultivation system comprising a framework comprising two or more levels for growing plants, wherein the levels are stacked one upon the other and further comprising a movable rack over each of the levels, wherein the movable racks are configured to provide at least one of climate control, nutrition control, irrigation, growth monitoring and grow lights for growing plants on respective levels and the movable racks are movable to different heights between the stacked levels.

### Summary of the invention

The invention is defined by the features of the independent claims. Some specific embodiments are defined in the dependent claims.

According to a first aspect of the present invention, there is provided a plant cultivation system according to claim 1.

According to a second aspect of the present invention, there is provided a trolley in accordance with claim 6.

According to a second aspect of the present invention, there is provided a harvester in accordance with claim 12.

Further aspects of the present invention are defined by the dependent claims.

### Brief description of the drawings

FIG.1 illustrates an example of a plant cultivation system in accordance with at least some embodiments of the present invention;
FIG. 2 illustrates an example of a level of a plant cultivation system viewed from one end of the level in accordance with at least some embodiments of the present invention;
FIG. 3 illustrates an example of a level of a plant cultivation system viewed from above in accordance with at least some embodiments of the present invention;
FIG.4 illustrates an example of a trolley for a plant cultivation system in accordance with at least some embodiments of the present invention;
FIG. 5 illustrates examples of seed holding rollers for a trolley in accordance with at least some embodiments of the present invention;
FIG. 6 illustrates a top view of an example of a harvester for a plant cultivation system in accordance with at least some embodiments of the present invention;
FIG. 7 illustrates a back view of an example of a harvester for a plant cultivation system in accordance with at least some embodiments of the present invention;
FIG. 8 illustrates a side view of an example of a harvester for a plant cultivation system in accordance with at least some embodiments of the present invention; and
FIG. 9 an example of a method in accordance with at least some embodiments of the present invention.

### Embodiments

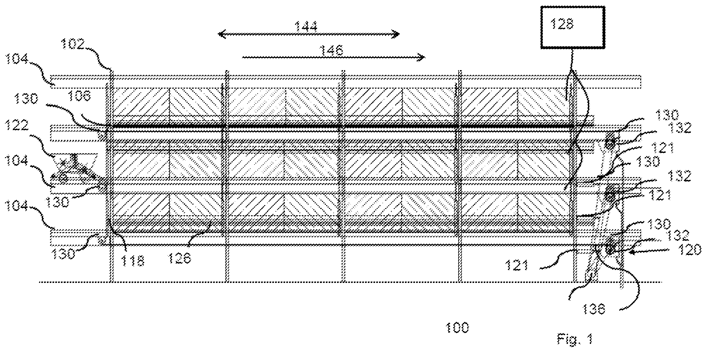

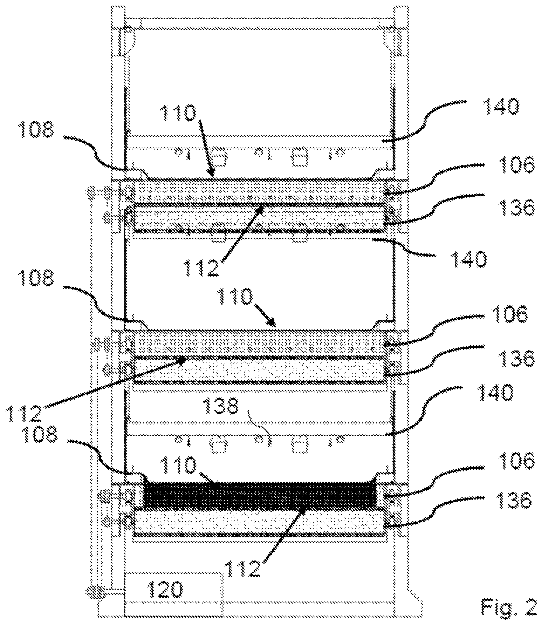

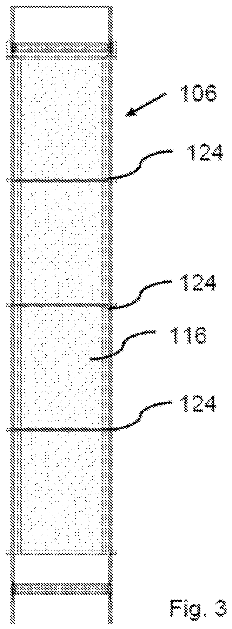

Examples of plant cultivation systems in accordance with at least some embodiments of the present invention are explained with reference to FIG. 1, FIG. 2 and FIG. 3. A plant cultivation system 100 comprises a framework 102 comprising two or more levels 104 for growing plants. The levels are stacked one upon the other and each level comprises a conveyor belt 106 and a longitudinal support 108 extending along the length of the conveyor belt between a top surface 110 and a bottom surface 112 of the conveyor belt. The longitudinal support has a profile diverted downwards between edges 114 for supporting a middle portion of the conveyor belt comprising a layer, i.e. growth layer or cultivation layer, 116 comprising growth medium with seeds or sprouted seeds between the edges. Thanks to the shape of the profile, the growth layer comprising growth medium with seeds or sprouted seeds may be guided to the middle of the conveyor belt such that the growth medium with seeds or sprouted seeds may be supported by the middle portion of the longitudinal support leaving at least one of the edges free from the growth medium with seeds or sprouted seeds. In this way growth medium, plants, water and nutrients may be prevented from falling to a level below the conveyor belt.

In an embodiment, a plant cultivation system 100 comprises a framework 102 comprising two or more levels 104 for growing plants. The levels are stacked one upon the other and each level comprises a conveyor belt 106. The framework comprises an adjusting system 118 connected to the levels and the framework for adjusting positions of the levels in the framework. The plant cultivation system further comprises a vertically movable rack 140 over each of the levels 104, wherein the movable racks are configured to provide at least one of climate control, nutrition control, irrigation, growth monitoring and grow lights for growing plants on respective levels. The movable rack may be connected, e.g. by hydraulic arms, pneumatic arms, metal strings, ropes, gears or belts, to a level above the movable rack. The adjusting system provides that height of each level may be adjusted separately. Since the height of each level may be adjusted separately, a distance between the stacked levels may be adjusted suitable for providing a desired clearance for cultivation of specific species of crops. For example, when corn is grown, a higher distance between the levels is required than if lettuce is grown. In this way the plant cultivation system may support growing crops that have different heights, when they are ready for harvesting. The vertically movable rack is movable to different heights between the stacked levels, such that the movable rack may be adjusted to a suitable height as the plants are grown. In an example, after the seeds are sown, the height of the movable rack is at a lower height between the stacked levels than when the plants have grown ready for harvesting. Accordingly a suitable height may be a height, where climate control, nutrition control, irrigation, growth monitoring and grow lights of the movable rack may support growth of the plants. In an example, a suitable height may be a height above plant tops on the conveyor belt. The height of the movable rack may be adjusted based on data obtained by monitoring the growth of the plants by eye sensors. Further details of the movable rack are described in more detail below.

In example operation of the plant cultivation system 100, the adjusting system 118 is operated to adjust a height of one or more levels of the plant cultivation system in accordance with species of plants grown on the levels. The height may be determined to be a height sufficient for operation of the movable rack above plant tops, when the plants are ready for harvesting. It should be appreciated that this height may depend on the species of the plants. Then the movable rack may be adjusted to a height that is determined based on growth monitoring of the plants or growth layer of the plants on the conveyor belt. In this way the movable rack may be at a suitable height for supporting growth of the plants by climate control, nutrition control, irrigation, growth monitoring and grow lights. Since each level has its own movable rack, the movable racks of each level may be at different height above the conveyor belt depending on the species of plants that are grown and/or height of the plants.

According to an example operation of the plant cultivation system 100, growth medium is deployed on the conveyor belt 106 and seeds are sown to the growth medium at one end of the conveyor belts. The seeds may be sowing apparatus, i.e. a trolley or a hopper. In this way, the conveyor belt is provided with the growth layer 116 comprising growth medium with seeds. The conveyor belt moves the growth layer towards the other end of the conveyor belt. During the time the growth medium with the seeds is moved, the seeds sprout and grow. Accordingly, advancement speed of the conveyor belt is adapted to the time of sprouting of the seeds and ripening of the crops. At the other end of the conveyor belt, the seeds have sprouted and crops may be harvested by a harvester apparatus, i.e. a harvester. During the time the growth layer travels from one end of the conveyor belt to the other end, water and nutrients may be applied on the growth medium. Since the growth layer is arranged to the conveyor belt such that the growth layer is supported by the middle portion of the profile, at least one of the edges and even both edges of the conveyor belt supported by the edges of the longitudinal support higher than the middle portion may be maintained free of the growth medium, water and/or nutrients. In this way the conveyor belt on the edges of the longitudinal support may be utilized for controlling operation of apparatuses used for cultivation according to the time it takes from planting the seeds to their sprouting and ripening of the crops.

The plant cultivation system may be used for cultivating various kinds of crops. Examples of crops include crops that do not have any medium, e.g. micro greens that will get harvested cut to the sizes and packaged. On the other hand, there are crops that require a growth medium e.g. soil and/or water. Examples of the crops that require a growth medium comprise rice, wheat, oat or any type of grain and cereal. Production of crops that require a growth medium generates bio-waste material as side product that can be used for producing methane gas, CO₂, good microbes, fertilizers.

In an example, the levels 104 of the plant cultivation system may be stackable on top of each other such that cultivation capacity of the plant cultivation system 100 may be increased by adding one or more levels on top of the plant cultivation system and reduced by removing one or more levels from the plant cultivation system. In this way the plant cultivation system may be adapted to various locations inside buildings that may have different ceiling heights indoors.

In an example, the framework 102 may be configured to support maintenance of the plant cultivation system 100. One side, side of the framework extending in a direction of length 144 of the conveyor belt 106, of the framework may be detachable for the maintenance of the plant cultivation system 100. In this way maintenance such as removal and replacement of belts of the conveyor belts may be facilitated. The non-detachable side, in a direction of length of the plant cultivation system can be used as a frame for the next row of levels on the opposite side.

Example materials for the framework of the plant cultivation system 100 comprise metal, aluminum, stainless steel, wood, plastic and/or composite material.

A conveyor belt 106 may comprise rollers 130 at opposite ends of the conveyor belt. The rollers provide that a belt, preferably a food grade belt, installed around the rollers, may be driven around the rollers. In an example, one of the rollers may be an idle roller and one a motorized roller for driving the belt around the rollers. The motorized roller may be a self-driven roller or connected to a drive system 120 of the plant cultivation system or a motor by chain, gear, belt or any other means. The conveyor belt may be driven at a speed suitable for sowing seeds and/or harvesting crops grown from sown seeds. In an example, the belt may be driven first at one speed, when seeds are sown at one end of the conveyor belt. Then, the belt may be stopped until crops have grown from the seeds. After the crops have grown, the belt may be driven again to harvest the crops at the other end of the conveyor belt. At this time the belt may be driven at the same speed or a different speed. Once the crops have been harvested from a part of the belt, the part of the belt is turned to a bottom side of the conveyor belt. The same speed of the belt may be preferred, when crops are harvested and sown at the same time. On the other hand if the crops are harvested without driving the belt, for example by a harvester moving on top of the conveyor belt, after the crops have been harvested, the belt may be driven at a speed that is suitable for cleaning the belt. The belt may be cleaned by a cleaning system 132 of the plant cultivation system.

In an example, the plant cultivation system may comprise a growth medium roller. The growth medium roller may comprise cycles of medium wound around an axis. The medium may be made of organic, synthetic material, such as moss, bamboo fiber, coconut fiber or cotton cloth. The growth medium roller may be arranged to the one end of the conveyor belt 106, where growth medium with seeds or sprouted seeds between the edges is deployed on the belt for example by a feeder arrangement configured to feed seeds. The plant cultivation system may comprise two or more sets of arms for holding the growth medium roller. The growth medium roller may be positioned before the feeder arrangement configured to feed seeds on the conveyor belt. In this way the growth medium may be deployed on the conveyor belt first before the seeds may be sown on the growth medium deployed on the conveyor belt.

It should be appreciated that the profile of the longitudinal support may be conformable under the weight of the growth layer 116 deployed on the conveyor belt 106 and supported by the longitudinal profile. On the other hand the profile of the longitudinal support may be substantially rigid. Accordingly, the profile of the longitudinal support may take its shape, where the middle portion is diverted downwards from the edges at least, when weight of the growth layer 116 deployed on the belt is supported by the longitudinal support. The shape provides that escape of at least part of the growth layer 116 deployed on the belt and supported by the longitudinal support may be prevented.

In an example, the profile of the longitudinal support may be U-shaped. The longitudinal support may be made of stainless-steel, metal, plastic, composite material. In an example, the rigid longitudinal profile may be achieved by sufficient material strength of the longitudinal support. The rigid longitudinal support may be manufactured from a single sheet of material that is pressed into the form of the profile. In another example the rigid longitudinal support may be manufactured from parts, e.g. edge parts, middle part, that are joined together to form the profile. In an example, the conformable longitudinal support may be provided by configuring the middle portion and the edges 114 to have different capability to support weight. In an example, the edges of the longitudinal support may have a higher capability to support weight than the middle portion of the longitudinal support. In this way the middle portion may be made conformable under the weight of the growth layer 116 deployed on the belt and supported by the longitudinal support. In an example, the middle portion of the longitudinal support may be made of material or a material strength that allows the profile to bend downwards under the weight of the growth layer.

According to an embodiment, one or more edges 114 of the longitudinal support may be sloped towards the middle portion of the profile. In this way, flow of water and nutrients from the edges towards the middle portion 115 may be facilitated.

In an embodiment, the framework comprises an adjusting system 118 connected to the levels 104 for adjusting positions of the levels in the framework 102 and the adjusting system comprises one or more hydraulic arms, pneumatic arms, metal strings, ropes, gears or belts. The adjusting system provides that height of each level may be adjusted separately. In an example the adjusting system comprises hydraulic arms. The hydraulic arms may be electronically controllable. Each level may slide the lower level. Once a preferred height is reached, the height may be set by inserting a pin or a bolt pin to secure the levels and remove the weight of the levels from the adjusting system to rest on the pin or bolt pin. The adjusting system may be attached between one or more levels 104 that are one upon the other so when the adjusting system is operated each level 104 may be pushed upwards to set adjustment. A pin or bolt may be placed to hold positions of the levels. Accordingly, each level 104 may have a set of hydraulic arms arranged on along the length of the conveyor belt on both sides of the conveyor belt. The hydraulic arms may be driven together to push one or more levels above upwards. In this way, a desired space between the levels may be provided.

In an embodiment, the plant cultivation system 100 comprises a drive system 120 configured to drive conveyor belts 106 of the levels 104 at least one at a time. The drive system provides that the conveyor belts and the growth medium, seeds and/or plants on may be moved such that at least part of the conveyor belt, where crops have been harvested may be brought back to the end of the plant cultivation system, where further seeds may be sown, e.g. by a trolley 122. In an example operation of plant cultivation system 100, after or at the same time the crops are harvested from a part of the conveyor belt at one end of the conveyor belt, an empty part of the conveyor belt is turned on top of the longitudinal support 108, and seeds and growth medium are deployed on the conveyor belt. In an example, the harvesting may comprise that the conveyor belt is driven such that crops fall off the conveyor belt to a harvester positioned at the end of the conveyor belt and at the same time the conveyor belt is moved. On the other hand the harvesting may comprise that a harvester is moved over the conveyor belt for harvesting the crops and after that the conveyor belt is moved. The plant cultivation system may comprise a cleaning system 132 for cleaning the conveyor belt before the conveyor belt is turned on top of the longitudinal support 108, and seeds and growth medium are deployed on the conveyor belt. In an example, the drive system 120 may be configured to select which conveyor belt 106 is driven by the drive system. The selection of the conveyor belt may be provided by the drive system comprising arms 121 corresponding to conveyor belts, where each arm may be operated such that the drive system is caused to drive the conveyor belt corresponding to the operated arm. In an example, operation of the arm may cause that the drive system is selected to drive a drive belt connecting the conveyor belt to the drive system. It should be appreciated that alternatively or additionally to the arms 121, the selection of the conveyor belt may be provided by the drive system comprising a gearbox, or relays or any other device that is capable of connecting and disconnecting components.

In an embodiment, each of the levels 104 comprises railings or a track extending in a length direction 144 of the conveyor belt 106 for supporting movement of at least one of a trolley 122 and a harvester 142 over the conveyor belt.

In an embodiment, the railings or the track comprise pulleys or gears for supporting movement of the trolley over the conveyor belt. The pulleys or gears may be connected to the trolley such that operation of the pulleys or gears movement of the trolley over the conveyor belt.

In an embodiment, the plant cultivation system 100 comprises a gear, hydraulic arm or pneumatic arm for moving the trolley between levels 104. The gear, hydraulic arm or pneumatic arm may be connected to the trolley such that operation of the gear, hydraulic arm or pneumatic arm causes lifting or lowering the trolley.

In an embodiment, the framework 102 comprises one or more stoppers 124 arranged to extend between edges 114 of the longitudinal support such that escape of liquid or solids out of the longitudinal support is prevented.

In an example, the stoppers 124 may be arranged at the ends of the longitudinal support and/or between the ends. In an example, each level may have two or more stoppers inside the longitudinal support at either end of the longitudinal support and/or at any place in between the ends. The stoppers may be locked to the framework 102, whereby positions of the stoppers may be fixed which will prevent liquids or solids to escape from each end of the belt.

In an embodiment, the framework 102 comprises one or more stoppers arranged to extend in the direction of length of the longitudinal supports. Whereas stoppers 124 may be arranged to extend between edges 114 of the longitudinal support such that escape of liquid or solids out of the longitudinal support is prevented, the stoppers arranged to extend in the direction of length of the longitudinal supports may separate different crops grown on the conveyor belt.

In an embodiment, each level 104 comprises closures 126 on all sides of the level 104 and at the ends, for enabling at least one of climate control for crops cultivated on the level and protecting the crops from influences from outside the plant cultivation system. In this way effect of the external environment to the plant cultivation system, for example changes to climate, contamination of the crops and/or diseases to the crops, may be reduced.

In an example, the closures 126 enable maintaining desired environmental requirements such as humidity and temperature for one or more of the levels 104.

In an example the closures 126 may be made of plastic, glass, acrylic glass such as polymethyl methacrylate known also by name Plexiglass, roller films or any other transparent or non-transparent means. Accordingly, the closures may serve as windows for observation of the crops grown on the levels. The plant cultivation system 100 may be provided with a separate framework and/or the framework 102 of the plant cultivation system may be adapted for installing the closures. The closures may be installed to one or more sides of the plant cultivation system extending in a direction of length 144 of the conveyor belts 106 and/or to one or more sides of the plant cultivation system at the ends of the conveyor belts. The closures may be movable such that one or more closures may be moved for accessing the one or more of the levels. In this way inspection of the crops grown on the levels and/or maintenance of the plant cultivation system may be facilitated. In an example, the closures may be movable by a sliding and/or rotational movement. Accordingly, the closures may be connected to the framework 102 of the plant cultivation system by hinges for rotational movement and/or rails for sliding movement of the closures. In a further example, the closures may be roller films that provide opening and closing access to one or more levels by rotation of the roller. A roller film comprises film, preferably transparent film, wound around a roller. Then, rotation of the roller provides that the film may be extended to cover one or more levels of the plant cultivation system or the film may be wound back around the roller to provide access to the levels. The roller films may be attached to the framework of the plant cultivation system, for example to one or more of the levels.

In an embodiment, the plant cultivation system 100 comprises a vacuum system 128. The vacuum system may be connected to a harvester 142 to receive harvested crops and transferring the harvester crops by vacuuming the crops to a packaging machine. The packaging machine may be a machine configured to receive packaging material, for example in one or more stacks or rolls, and enclose the harvester crops into packages formed of the packaging material. In an example the packaging material may comprise bags and the crops are guided by the vacuum system to bags. After a bag is filled by the crops, the bag may be removed automatically and collected for transportation to destination. The packaged crops may be collected on pallets for facilitating their transportation.

In an embodiment, the plant cultivation system comprises movable racks 140 over each level 104, wherein the movable racks are configured to provide at least one of climate control, nutrition control, irrigation, growth monitoring and grow lights. In this way the movable racks facilitate growing plants on respective levels.

In an example, the movable rack 140 may provide a climate control and nutrition control of the level. For this purpose the movable rack may be connected to a Humidity Ventilation And Climate control (HVAC) system, a nutrition system, a CO₂ supply and a O₃ supply. The movable rack may be made of aluminum, stainless steel, metal, plastic, composite material. The movable rack may be hung, e.g. by metal stainless steel, galvanized wires or rope or other means through a series of pulleys, from a framework arranged above the conveyor belt 106, for example a framework of the level above.

Alternatively or additionally, the movable rack 140 may be connected to an electric motor that is operatively connected to the metal stainless steel, galvanized wires or rope or other means that the movable rack is hung from such that driving the electric motor may be caused to lower or raise the movable rack. The movable rack may comprise eye sensors arranged to monitor growth of plants on the conveyor belt 106. The electric motor may be configured to be controlled on the basis of data obtained by monitoring by the eye sensors. Examples of eye sensor devices comprise at least a sensor capable of detecting growth of the plants from optical information received from the plants in the field of view of the sensor device, such as an infrared sensor or a laser scanner. The eye sensor devices may be configured to generate data indicating growth of the plants in the field of view of the eye sensors. When the data indicates that the plants have grown up to a threshold height, the electric motor may be controlled to drive the movable rack upwards. In an example of the eye sensor comprising an infrared sensor, when the plant has grown to a height of the infrared sensor's field of view, the plant obstructs the field of view. Then, a signal may be caused to control the electric drive to move the movable rack upwards. The field of view of the eye sensors may be set automatically or manually based on specifications of each kind of crop, such that height of the movable rack may be controlled according to each kind of crop. The electric motor and eye sensor may be connected to a processing unit. The processing unit may comprise a memory and a processor. The memory may store a computer program comprising computer program code that when executed cause controlling the electric motor for moving the rack.

Alternatively or additionally, the movable rack 140 may comprise one or many pipes for conducting fresh air to crops on the conveyor belts 106 and old air out. The air conducted via the pipes may be controlled by an air circulation system. The air circulation system may be configured to take old air out of the levels 104, treat the old air, control temperature and humidity of the treated air, and feed the treated air back to the levels. It should be appreciated that fresh air may be fed to each level separately, whereby fresh air fed to each level may be controlled separately. The air circulation system may be referred to an HVAC system. The HVAC system may comprise fresh air pipes comprising multiple holes for conducting fresh air at multiple locations along the length direction 144 of the conveyor belts. One end of the pipe(s) may be closed and the other end(s) will be connected to a fresh air supply system for feeding fresh air to the pipe(s). The HVAC system may comprise airpipes on the sides or ends of each level of the plant cultivation system for conducting old air out of the levels. The air pipes may be connected to an air recycling / dehumidifying system of the HVAC system. After the old air received from the air pipes is treated by the recycling / dehumidifying system, afresh air system of the HVAC system may control the temperature and humidity of the treated air and supply the treated air as fresh air to the fresh air pipes. One or many heating elements, electric, hot air or any other means, may be installed to the fresh air system for controlling temperature of the fresh fed to the fresh air pipes. The temperature may be adjusted by thermostat(s) to allow correct temperature inside each level. One or multiple led-illuminated diodes, phosphorus lights and or any other types of grow lights will be hung or otherwise attached to the movable rack. One or multiple stainless steel, plastic pex pipe, metal, or other types of pipe will be hung also on the movable rack which will have one or multiple nozzles 138 which will be used to spray / mist / drip nutrition, water or any liquid on the crops grown on the conveyor belt. A nutrition supply, CO₂ supply, O₃ supply, and H₂O-supply may be connected by solenoids to the pipes for supplying nutrition, CO₂, O₃, H₂O. Additionally, one or more supplies of any additional gases or liquids for crop growth or disinfection purposes may be connected by solenoids to the pipes for supplying the gases or liquids to the crops. The solenoids may be connected to the processing unit. The memory may store a computer program comprising computer program code that when executed cause controlling the solenoids for supplying nutrition, CO₂, O₃, H₂O and/or any additional gases or liquids for crop growth or disinfection purposes at a desired time and by a desired amount, which may be defined based on plants that are cultivated.

In an embodiment the plant cultivation system 100 may comprise at one end of the conveyor belts 106, cleaning systems 132 configured to brush and wash the conveyor belts.

In an example, a cleaning system may comprise a brush-roller 136 and liquid nozzle(s) arranged under a conveyor belt. The liquid nozzle(s) may eject pressurized detergent and/or water to the conveyor belt and the brush-roller contacts the conveyor belt for cleaning the conveyor belt. The cleaning system includes a dryer arranged to the cleaning system after the brush-roller and liquid nozzle(s) in a running direction 146 of the conveyor belt. In this way the conveyor belt may be dried after the conveyor belt is cleaned by the brush-roller and the liquid nozzle(s). In this way the conveyor belt that is moved through the cleaning system is first cleaned by the brush-roller and the liquid nozzle(s) after which the conveyor belt is dried. The dried belt may be then moved towards the other end of the plant cultivation system to be sowed anew. Examples of the dryer comprise at least a blade that is pressed, e.g. upwards, against the conveyor belt for removing excess liquid from the conveyor belt. The cleaning system, e.g. the brush roller, may be connected to a drive system 120 of the plant cultivation system or a motor by chain, gear, belt or any other means. Preferably, the cleaning system is driven at a higher speed than a motorized roller driving the conveyor belt such that the conveyor belt may be efficiently cleaned by the cleaning system. The speed of the cleaning system may be configured by adapting the speed the drive system is configured to drive the chain, gear, belt or other means. In an example, a brush-roller 136 of the cleaning system is connected to the drive system by a belt to a pulley of the drive system. The motorized roller may be connected to the drive system by another pulley that is of different size. In this way, the brush-roller may be driven at a rotation speed that is a multiple of the speed of rotation of the motorized roller such that the conveyor belt may be efficiently cleaned.

In an alternative embodiment, the plant cultivation system 100 may comprise a bio-waste processing system. The bio-waste processing system may be configured to chop and crush the bio-waste material generated as side product and send it separately to bio-waste collectors. The bio-waste processing system may be provided in connection with a harvester operated for harvesting crops positioned at an opposite end of the conveyor belt with respect to the end, where seeds are sown.

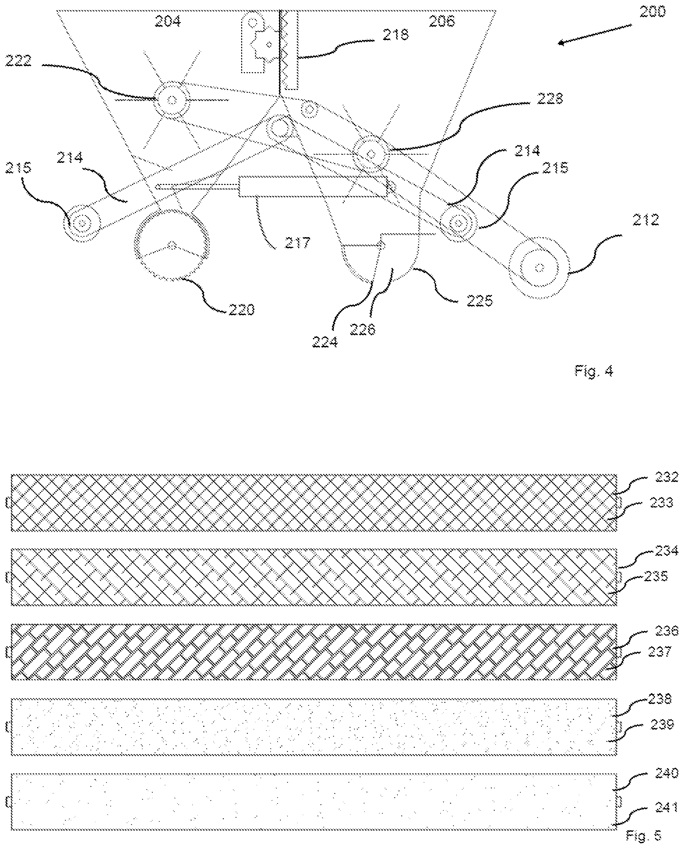

FIG. 4 illustrates an example of a trolley for a plant cultivation system in accordance with at least some embodiments of the present invention. The plant cultivation system may be the plant cultivation system described with FIG.1. A trolley 200 for a plant cultivation system comprises a support structure for supporting the trolley over a conveyor belt and the trolley comprises a first container 204 for seeds and a second container 206 for growth medium, wherein the first container comprises a first feeder arrangement configured to sow seeds, controlled by movement of the conveyor belt, on the conveyor belt and the second container comprises a second feeder arrangement configured to feed growth medium on the conveyor belt, controlled by the movement of the conveyor belt.

In example the first container 204 and/or the second container 206 may be formed as chutes that are open from above and have openings downwards such that contents of the containers, i.e. seeds and growth medium, may be communicated efficiently on the conveyor belt with help of gravity. In an example operation of the trolley, the trolley is positioned over the conveyor belt such that the first container is first, e.g. upwards, with respect to the first container, in a running direction of the conveyor belt. Accordingly, the running direction of the conveyor belt is from the first container to the second container in the longitudinal direction of the conveyor belt. In this way the seeds may be sown on the conveyor belt before the growth medium fed from the second container. The seeds may be fed from the first container on top of growth medium deployed on the conveyor belt from a growth medium roller.

In an example, the trolley 200 may be made of any material, aluminum, stainless steel, metal, plastic and/or composite material. The first and second containers 204, 206 may be mechanically attached together such that the trolley provides a single unit for deploying seeds and a growth layer on a conveyor belt.

In an embodiment, the trolley 200 comprises at least one drive wheel 212 arranged to make contact with the at least one of the edges of the conveyor belt and drive the first feeder arrangement and the second feeder arrangement based on the movement of the conveyor belt. In this way the first and second feeder arrangements may be driven using the same speed or at least a speed proportional to the driving speed of the conveyor belt.

In an embodiment, the support structure of the trolley comprises legs 214 arranged to be supported by railings or a track of the plant cultivation system extending in a length direction of the conveyor belt for supporting movement of a trolley over the conveyor belt.in an example, the legs have wheels 215 for facilitating movement on the railings or track.

In an example, the trolley comprises two arms or legs, where rollers serving as the drive wheels 212 are arranged. The arms may be provided at each end of the trolley. The rollers may rest on the belt. The rollers may be connected to the first and second feeder arrangement by belt, gear, chain, or other means. As the conveyer belt moves the drive wheels communicate the movement of the conveyor belt to the feeder arrangements, whereby seed and the medium may be fed on the belt via outputs of the feeder on the belt based on the same speed or at least a speed proportional to the driving speed of the conveyor belt. It should be appreciated that whether one or both of the feeder arrangements are driven and/or whether seed or medium is fed on the belt may be selectable e.g. by opening and closing output of the feeders and/or controlling the drive gears or other means.

In an example the trolley comprises four legs 214, two of which extend backwards and two of which extend forwards in a longitudinal direction of the conveyor belt of the plant cultivation system. The legs may also extend downwards from the trolley such that the legs may be supported on railings or a track of the plant cultivation system, whereby bottom of the trolley may be elevated to a desirable height above the conveyor belt. The legs supported by the railings or the track may be adapted to communicate with pulleys or gears of the plant cultivation system such that the trolley may be moved along the length of the conveyor belt. In this way the trolley may be moved in the longitudinal direction of the level over the conveyor belt and optionally also out of the framework such that the containers can be easily refilled.

In an embodiment, the trolley 200 comprises a first height-adjustment system for adjusting a free space between the trolley and the conveyor belt.

In an example the first height-adjustment system comprises one or more adjustable supports 217, rotational gears, hydraulic arms, pneumatic arms or other means. The adjustable supports or rotational gears, hydraulic arms, pneumatic arms or other means may be manual or automatic. An adjustable support maybe a shaft that extends between legs of the trolley. The adjustable support may be fixed at one point of attachment to legs of the trolley which extend forwards and at another point of attachment to legs of the trolley which extend backwards in the longitudinal direction of the conveyor belt. At least one of the points of attachment may be at least partially released such that the legs extending forwards and the legs extending backwards may be brought closer to each other or moved further from each other such that free space between the trolley and conveyor belt may be adjusted as desired. When the free space is suitable, the legs may be fixed to their positions by securing the released points of attachment.

In an embodiment, the trolley 200 comprises a second height-adjustment system 218 for adjusting a free space between the second container 206 and the conveyor belt separately from the first container 204. The free space between the second container 206 and the conveyor may define a thickness of growth medium fed on the conveyor belt. In this way seeds may be sown to a desired depth under the growth medium for efficiently growing the seeds.

In an example the second height-adjustment system 218 comprises one or more rotational gears, hydraulic arms, pneumatic arms or other means that may be manual or automatic. The rotational gears, hydraulic arms, pneumatic arms or other means may be configured to provide adjusting the free space between the conveyor belt and the second container 206 without adjusting the free space between the first container 204 and the conveyor belt. Accordingly, the second height-adjustment system may provide movement of the first container and second container with respect to each other. The trolley may comprise a latch or corresponding means for securing the first and second containers to their positions with respect to each other.

In an embodiment, the legs 214 are adapted to pulleys or gears of the railings or the track of the plant cultivation system for moving the trolley in the direction of the conveyor belt.

In an embodiment, the first feeder arrangement comprises a seed holding roller 220 arranged at an output of the first container 204 and a first mixer 222 configured to feed seeds within the first container 204 to the seed holding roller 220. In this way seeds may be sown on the conveyor belt as controlled by rotation of the seed holding roller. The seed holding roller may be freely rotatable such that a rotational movement of the first mixer may be communicated by the seeds within the first container to the seed holding roller for rotating the seed holding roller and for sowing on the conveyor belt controllably by the see holding roller. The seed holding roller may be preferably located under the first mixer within the first container such that the rotational movement of the first mixer may be efficiently communicated to the seed holding roller. It should be appreciated in some embodiments the seed holding roller may be motorized, whereby adaptation of positions of the seed holding roller and the first mixer with respect to each other may be provided.

In an example the first mixer 222 provides a rotational movement controlled based on the speed of the conveyor belt such that the mixer causes seeds inside the first container to be fed to the seed holding roller 220. The growth medium may be transferred on the conveyor belt by rotational movement of the second mixer 228 driven by a drive wheel 212.

In an embodiment, the second feeder arrangement comprises a shutter 224 arranged at an output 226 of the second container 206 for controlling output of the growth medium from the second container and a second mixer 228 configured to feed growth medium within the second container to the output 220 of the second container 206.

In an example the second mixer 222 provides a rotational movement controlled based on the speed of the conveyor belt such that the second mixer causes growth medium inside the second container to be fed to the output. The growth medium is transferred on the conveyor belt at a rate controlled by rotational movement of the second mixer and the shutter.

In an example the shutter provides controlling a size of opening of the output 226 of the second container 206. In this way the opening may be at least partially open, all the way open or closed.

In an embodiment, the output 226 of the second container 206 is directed in an opposite direction with respect to a running direction of the conveyor belt. In this way flow rate of growth medium out of the second container may be controlled and the growth medium is deployed on the conveyor belt to have even thickness on the conveyor belt.

In an example, a guide 225 is installed to the output 226 for directing the output to a desired direction, e.g. the opposite direction with respect to a running direction of the conveyor belt.

In an embodiment, the first container 204 is positioned before the second container 206 with respect to a running direction of the conveyor belt. Accordingly, the seeds are sown on the conveyor belt by the first feeder arrangement before the growth medium is deployed by the second feeder arrangement.

In an embodiment, the trolley 200 is connected to a gear in the plant cultivation system for moving the trolley between levels. In this way a single trolley may be capable of feeding seeds and growth medium on various levels of the plant cultivation system. Accordingly, the trolley may be referred to a hopper.

FIG. 5 illustrates examples of seed holding rollers for a trolley in accordance with at least some embodiments of the present invention. The seed holding rollers 232, 234, 236, 238, 240 may be used as the seed holding roller 220 in the first feeder arrangement of the trolley 200 described with FIG.4.

The seed holding rollers 232, 234, 236, 238, 240 comprise surface patterns for different sizes or a size range of seeds. The seed-holding roller in accordance with the size or size range of seeds to be sown may be installed to a trolley such that the trolley may be adapted to operate for sowing a specific size or size range of seeds.

A surface pattern may be a grid formed by radial protrusions, for example edges. The radial protrusions extend in a direction of radius of the seed holding roller and are configured to form openings 233, 235, 237, 239, 241 between the protrusions. The openings may be matched to a specific size or a size range of seeds. In this way the size of seeds sown by the seed holding roller on the conveyor belt may be controlled. The grid may comprise openings 233 that may be all of the same size or the grid may comprise openings 235, 237, 239, 241 that may be of different sizes. Alternatively or additionally, the density of the openings may vary in the seed holding roller. For example, the density of the openings 233 of the seed holding roller 232 may be substantially even. On the other hand, the density of the openings 235, 237 of the roller 234, 236, 238, 240 may vary over the surface of the seed holding roller.

In an example, one side of the trolley 200 may be opened for installing and removing of a seed holding roller 232, 234, 236, 238, 240. When the side of the trolley is opened, the seed holding roller may be pushed into its operating position within the trolley after which the side of the trolley may be closed and the seed holding roller may be used for sowing the seeds.

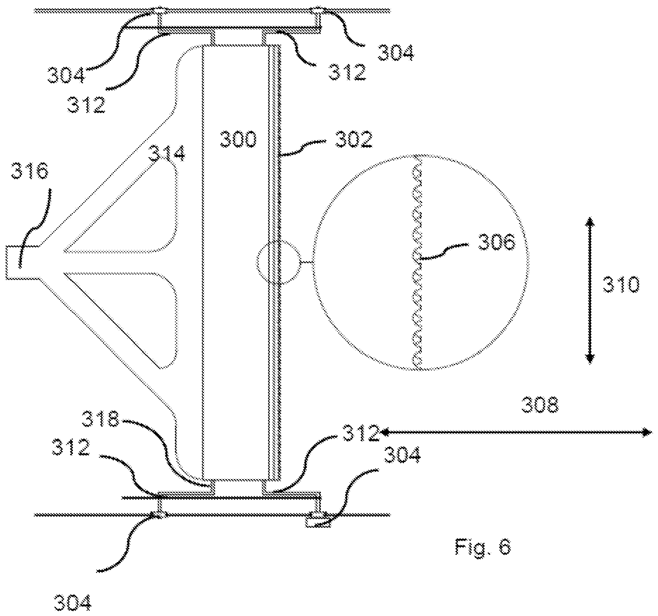

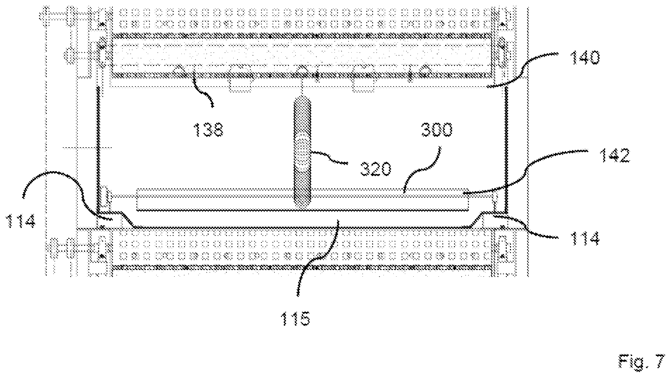

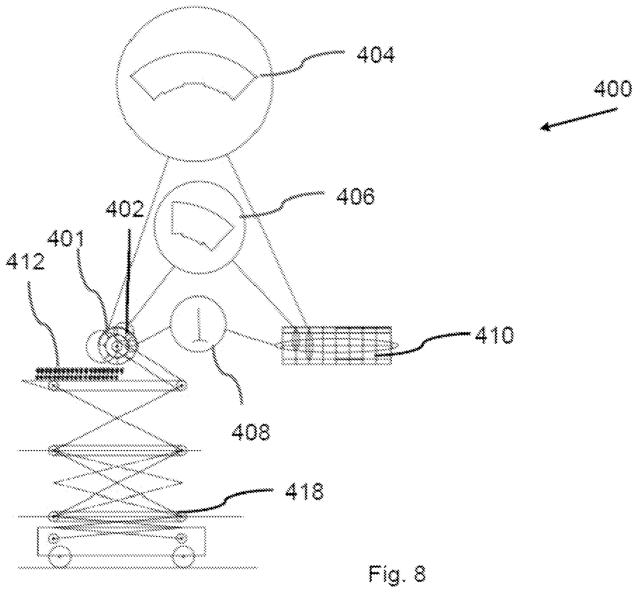

Examples of harvesters in accordance with at least some embodiments of the present invention are next described with reference to FIG. 6, FIG. 7and FIG. 8. The harvester 300, 400 may be used for harvesting crops 412 in a plant cultivation system described with an embodiment. The harvester 300, 400 for a plant cultivation system comprises a blade arrangement 302, 402 comprising blades, wherein the blade arrangement is configured to harvest crops by a cutting movement of the blade arrangement, wherein the cutting movement of the blade arrangement has an opposite direction of rotation to a direction of rotation of the conveyor belt or the cutting movement of the blade arrangement has a transverse direction with respect to the direction of movement of the conveyor belt. FIG. 6 illustrates a top view of the harvester 300, FIG. 7 illustrates a back view of the harvester 300 and FIG. 8 illustrates a side view of the harvester 400. In FIG. 7 the harvester is illustrated with items of the plant cultivation system described with FIG. 1. At least in some embodiments, the harvester of FIG.6 may be adapted movable over the conveyor belt. At least in some embodiments, the harvester of FIG.7 may be adapted to harvest crops, when being stationary at one end of the conveyor belt of the plant cultivation system.

A stationary harvester 300, 400 may be attached to the framework of the plant cultivation system or the stationary harvester may have its own framework supported on the ground at the end of the plant cultivation system or the stationary harvester's own framework may be attached to lifting system 318, 418, for example a scissor lifter, or any other type of lifting device. The stationary harvester may have one or more tooling systems adapted for harvesting different crops 412. The tooling systems may comprise one or more blade arrangements 402.

In an example, where the cutting movement of the blade arrangement has a transverse direction 310 with respect to the direction 308 of movement of the conveyor belt, the blade arrangement may comprise blade parts 306 that are arranged on top of each other and movable in the transverse direction with respect to each other. The blade parts have cutting edges arranged to protrusions that extend towards the crops. The cutting edges are directed in the direction of the cutting movement. In this way crops may be cut by the blade arrangement in a similar manner as blades in a hedge trimmer.

In an example the harvester 300, 400 may be connected by belt or gear to a motorized roller of the conveyor belt 106. In this way, when the conveyor belt 106 is moving, the harvester roller may be moved with the same speed.

In an example, where the cutting movement of the blade arrangement has an opposite direction of rotation to a direction of rotation of the conveyor belt, the blade arrangement 402 may be arranged to a roller 401. Blade parts of the blade arrangement may form a perimeter of the roller. Cutting edges of the blade parts may be at the perimeter such that as the roller is rotated and crops are brought in contact with the roller, the crops are cut by the cutting edges. The blade parts may form a grid 410. The grid may be formed by blade parts 408 extending in a width direction of the roller and blade parts 404, 406 extending around the perimeter of the roller. The blade parts extending in the direction of the perimeter may be of different lengths.

In an embodiment, the harvester 300 comprises a reception channel 316 for harvested crops and a vacuum system is connected to the reception channel by a flexible pipe 320 for receiving the harvested crops from the reception channel.

In an embodiment, the harvester 300 comprises legs 312 adapted movable on railings or a track extending in a length direction of the conveyor belt for supporting movement of the harvester over the conveyor belt.

In an example, the harvester 300 comprises four legs 312, two of which extend backwards and two of which extend forwards in a longitudinal direction of the level of the plant cultivation system. The legs may also extend downwards from the harvester such that the legs may be supported on railings or a track of the plant cultivation system, whereby bottom of the harvester may be elevated above the conveyor belt.

In an embodiment, the legs 312 comprise wheels 304 and the harvester comprises a motor arranged to drive the wheels or pulleys on the railings or the track.

In an example the pulleys comprise hard wire rope belt gear for pulling the harvesting unit forwards or backwards.

In an embodiment, the harvester 300, 400 comprises a lifting system 318, 418 for adjusting height of the harvester vertically with respect to the conveyor belt and/or moving the harvester between levels of the plant cultivation system.

In an example, the lifting system 318 comprises one or more rotational gears, hydraulic arms, pneumatic arms and or belt and or chain that retractor opens the legs 304 for moving the harvester vertically up and down over the conveyor belt. In this way the elevation of the harvester above the conveyer belt may be adjusted depending on the crop height and desired cutting height of the crops.

In an example, the lifting system 418 comprises a scissor lifter. The harvester may be installed on the scissor lifter such that the harvester positioned at the end of the conveyor belts may be moved to the ends of the conveyor belts for harvesting crops 412.

In an example, the harvester 300 may be configured to connect to a vacuum system for communicating harvested crops from the harvester to the vacuum system. The harvester may comprise a framework 314 that extends in a width direction of the conveyor belt. The framework of the harvester may form a reception channel 316 for harvested crops and a vacuum system is connected to the reception channel. The back of the framework of the harvester that is positioned away from the blade arrangement comprises an opening. One end of a flexible pipe 320 may be attached to the opening for connecting the harvester to the vacuum system connected to the other end of the flexible pipe. Accordingly, the harvested crops may be carried by the framework and removed from the harvester via the opening. The flexible pipe may be connected to a movable rack of the plant cultivation system. The flexible pipe may be attached to the movable rack of the plant cultivation system e.g. by a hard cable in different measures. In this way the movable rack may be moved, e.g. forwards or backwards over the conveyor belt, with the harvesting unit as the harvesting unit is moved.

The harvester 300, 400 may comprise a processing unit that is connected to the motor and the blade arrangement 302, 402. The processing unit may comprise a memory and a processor. The memory may store a computer program comprising computer program code that when executed cause controlling the motor for moving the rack and/or blade arrangement for cutting the crops 412. At least some embodiments, the processing unit may be connected to a vacuum system for causing vacuuming harvested crops during cutting crops by the blade arrangement. At least in some embodiments, the processing unit may be connected to a robotic arm that can be used to maintain to plant seeds / seedlings and to harvest. The robotic arm may be installed to the framework of the plant cultivation system.

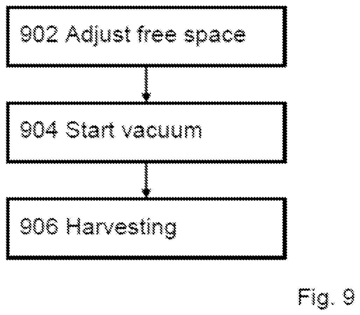

FIG.9 illustrates an example of a method in accordance with at least some embodiments of the present invention. The method may be performed by a harvester described with FIG.6, FIG.7 or FIG.8 operated in a plant cultivation system in accordance with FIG.1. The harvester may comprise a control system comprising computer program code that when executed by the control system causes the harvester to perform one or more phases of the method. Phase 902 comprises adjusting free space between the harvester and the conveyor belt. Phase 904 comprises starting a vacuum system connected to a reception channel by a flexible pipe for receiving harvested crops from the reception channel. Phase 906 comprises driving on top of the conveyor belt for harvesting the crop.

It should be appreciated that a trolley and a harvester, for example the trolley 122 and harvester 142 of Fig. 1, in accordance with at least some embodiments, may be adapted to dimensions of the plant cultivation system. For example, operational widths of the trolley, feeder arrangements and/or dimensions of parts of the trolley may be defined based on width of the conveyor belt, width of the profile of the longitudinal support underneath the conveyor belt and/or width of parts thereof. The width herein refers to a direction that is transverse to the running direction of the conveyor belt in a plane defined by the conveyor belt.

It is to be understood that the embodiments disclosed are not limited to the particular structures, process steps, or materials disclosed herein, but are extended to equivalents thereof as would be recognized by those ordinarily skilled in the relevant arts. The scope of the invention is defined by the appended claims.

Reference throughout this specification to "one embodiment" or "an embodiment" means that a particular feature, structure, or characteristic described in connection with the embodiment is included in at least one embodiment.

Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and examples may be referred to herein along with alternatives for the various components thereof. It is understood that such embodiments, examples, and alternatives are not to be construed as de facto equivalents of one another, but are to be considered as separate and autonomous representations.

Furthermore, the described features, structures, or characteristics may be combined in any suitable manner in one or more embodiments. In the present description, numerous specific details are provided, such as examples of lengths, widths, shapes, etc., to provide a thorough understanding of embodiments.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. Furthermore, it is to be understood that the use of "a" or "an", i.e. a singular form, throughout this document does not exclude a plurality.

### REFERENCE SIGNS LIST

- 222: Mixer
- 224: Shutter
- 225: Guide
- 226: Output
- 228: Mixer
- 232: Seed holding roller
- 233: Opening
- 234: Seed holding roller
- 235: Opening
- 236: Seed holding roller
- 237: Opening
- 238: Seed holding roller
- 239: Opening
- 240: Seed holding roller
- 241: Opening
- 300: Harvester
- 302: Blade arrangement
- 304: Wheels
- 306: Blade Parts
- 308: Direction of Movement of Conveyor Belt
- 310: Direction of Cutting Movement
- 312: Legs
- 314: Framework
- 316: Reception Channel
- 318: Lifting System
- 320: Flexible Pipe
- 400: Harvester
- 401: Roller
- 402: Blade Arrangement
- 404: Blade part
- 406: Blade part
- 408: Blade part
- 412: Crops
- 418: Lifting System
- 902 to 906: Phases of FIG.9

## Claims

1. Plant cultivation system (100), comprising:
- a framework (102) comprising two or more levels (104) for growing plants, wherein the levels (104) are stacked one upon the other and
- a movable rack (140) over each of the levels (104), wherein the movable racks (140) are configured to provide at least one of climate control, nutrition control, irrigation, growth monitoring and grow lights for growing plants on respective levels (104) and the movable racks (140) are movable to different heights between the stacked levels 104; **characterised in that** each level (104) comprises a conveyor belt (106) and each of the levels (104) comprises railings or a track extending in a length direction (144) of the conveyor belt (106) for supporting movement of at least one of a trolley (122) and a harvester (142) over the conveyor belt (106), and the framework (102) comprises an adjusting system (118) connected to the levels (104) and the framework (102) for adjusting positions of the levels (104) in the framework (102); and that the railings or the track comprise pulleys or gears for supporting movement of at least one of the trolley (122) and the harvester (142) over the conveyor belt (106).

2. The plant cultivation system (100) according to claim 1, wherein each level (104) comprises:
a conveyor belt (106) and a longitudinal support (108) extending along the length of the conveyor belt (106) between a top surface (110) and a bottom surface (112) of the conveyor belt (106), and the longitudinal support (108) has a profile diverted downwards between edges (114) for supporting a middle portion (115) of the conveyor belt (106) comprising a growth layer (116) between the edges (114), and at least one of the edge portions of the conveyor belt (106) are free of growth medium, seeds and/or plants.

3. The plant cultivation system (100) according to any of the preceding claims, comprising:
- a gear for moving the trolley (122) between levels (104);
- a vacuum system (128);
- a movable rack (140) over each of the levels (104), wherein the movable racks (140) are configured to provide at least one of climate control, nutrition control, irrigation, growth monitoring and grow lights; and/or
- a drive system (120) configured drive conveyor belts (106) of the levels (104) at least one at a time.

4. The plant cultivation system (100) according to any of the preceding claims, wherein the framework (102) comprises one or more stoppers (124) such that escape of liquid or solids out of the longitudinal support (108) is prevented or different crops grown on the conveyor belt (106) are separated.

5. The plant cultivation system (100) according to any of the preceding claims, wherein each level (104) comprises closures (126) on all sides of the level (104) and at the ends, for enabling climate control for crops cultivated on the level (104).

6. A trolley (122) for a plant cultivation system (100) according to any of claims 1 to 5, wherein the trolley (122) comprises a support structure for supporting the trolley (122) over a conveyor belt (106) and the trolley (122) comprises a first container for seeds and a second container for growth medium, wherein the first container comprises a first feeder arrangement configured to sow seeds, controlled by movement of the conveyor belt (106), on the conveyor belt (106) and the second container comprises a second feeder arrangement configured to feed, controlled by the movement of the conveyor belt (106), growth medium on the conveyor belt (106); wherein the support structure of the trolley (122) comprises legs arranged to be supported by the railings or the track of the plant cultivation system (100) extending in a length direction (144) of the conveyor belt (106) for supporting movement of at least one of a trolley (122) and a harvester (142) over the conveyor belt (106), and the legs are adapted to pulleys or gears of the railings or the track of the plant cultivation system (100) for moving the trolley (122) in the direction of the conveyor belt (106).

7. The trolley according to claim 6, comprising at least one drive wheel arranged to make contact with the at least one of the edges of the conveyor belt and drive the first feeder arrangement and the second feeder arrangement based on the movement of the conveyor belt.

8. The trolley (122) according to claim 6 or 7, comprising:
- a first height-adjustment system for adjusting a free space between the trolley and the conveyor belt (106), and/or
a second height-adjustment system for adjusting a free space between the second container and the conveyor belt (106) separately from the first container.

9. The trolley (122) according to any of claims 6 to 8, wherein
- the first feeder arrangement comprises a seed holding roller arranged at an output of the first container and a first mixer configured to feed seeds within the first container to the seed holding roller, and/or
the second feeder arrangement comprises a shutter arranged at an output of the second container for controlling output of the growth medium from the second container and a second mixer configured to feed growth medium within the second container to the output of the second feeder arrangement.

10. The trolley (122) according to claim 9, wherein the output of the second container is directed in an opposite direction with respect to a running direction (146) of the conveyor belt (106).

11. The trolley (122) according to any of claims 6 to 10, wherein the first container is positioned before the second container with respect to a running direction (146) of the conveyor belt.

12. A harvester (142) for a plant cultivation system (100) according to any of claims 1 to 5, wherein the harvester (142) comprises:
- a blade arrangement comprising blades, wherein the blade arrangement is configured to harvest crops by a cutting movement of the blade arrangement, wherein the cutting movement of the blade arrangement has
- an opposite direction of rotation to a direction of rotation of the conveyor belt (106)
or
- the cutting movement of the blade arrangement has a transverse direction with respect to the direction of movement of the conveyor belt (106); and legs adapted movable on the railings or the track extending in a length direction (144) of the conveyor belt (106) for supporting movement of the harvester (142) over the conveyor belt (106) and the legs comprise wheels and the harvester (142) comprises a motor arranged to drive the wheels or pulleys on the railings or the track.

13. The harvester (142) according to claim 12, comprising a reception channel for harvested crops and a vacuum system (128) is connected to the reception channel by a flexible pipe for receiving the harvested crops from the reception channel.

14. The harvester (142) according to claim 12 or 13, comprising a lifting system for adjusting height of the harvester (142) vertically with respect to the conveyor belt (106) and/or moving the harvester (142) between levels (104) of the plant cultivation system (100).

15. The harvester (142) according to any of claims 12 to 14, wherein the harvester (142) comprises a control system comprising computer program code that when executed by the control system causes the harvester (142) to perform at least one of:
- adjust free space between the harvester (142) and the conveyor belt (106),
- start a vacuum system (128) connected to a reception channel by a flexible pipe for receiving harvested crops from the reception channel,
- drive on top of the conveyor belt (106) for harvesting crops.

## Patentansprüche

1. Pflanzenzuchtsystem (100), umfassend:
- einen Rahmen (102), der zwei oder mehr Ebenen (104) zum Anpflanzen von Pflanzen umfasst,
wobei die Ebenen (104) übereinander gestapelt sind und
- ein bewegliches Gestell (140) über jeder der Ebenen (104), wobei die beweglichen Gestelle (140) so konfiguriert sind, dass sie mindestens eines von Klimaregelung, Ernährungsregelung, Bewässerung, Wachstumsüberwachung und Wachstumsbeleuchtung für wachsende Pflanzen auf jeweiligen Ebenen (104) bereitstellen und die beweglichen Gestelle (140) zwischen den gestapelten Ebenen (104) auf unterschiedliche Höhen bewegbar sind;
**dadurch gekennzeichnet, dass** jede Ebene (104) ein Förderband (106) umfasst und jede der Ebenen (104) Reling oder eine Schiene, die sich in einer Längsrichtung (144) des Förderbands (106) erstreckt, um die Bewegung mindestens eines Transportwagens (122) zu unterstützen, und eine Erntemaschine (142) über dem Förderband (106) umfasst und der Rahmen (102) ein Einstellsystem (118) umfasst, das mit den Ebenen (104) und dem Rahmen (102) verbunden ist, um Positionen der Ebenen (104) in dem Rahmen (102) einzustellen; und dass die Reling oder die Schiene Riemenscheiben oder Zahnräder zum Unterstützen der Bewegung von mindestens einem von dem Transportwagen (122) und der Erntemaschine (142) über das Förderband (106) umfassen.

2. Pflanzenzuchtsystem (100) nach Anspruch 1, wobei jede Ebene (104) Folgendes umfasst:
ein Förderband (106) und einen Längsträger (108), der sich entlang der Länge des Förderbands (106) zwischen einer oberen Fläche (110) und einer unteren Fläche (112) des Förderbands (106) erstreckt, und der Längsstütze (108) ein nach unten zwischen Rändern (114) umgelenktes Profil aufweist, um einen mittleren Abschnitt (115) des Förderbands (106) zu stützen, der eine Wachstumsschicht (116) zwischen den Rändern (114) umfasst, und mindestens einer der Randabschnitte des Förderbandes (106) frei von Wachstumsmedium, Samen und/oder Pflanzen ist.

3. Pflanzenzuchtsystem (100) nach einem der vorhergehenden Ansprüche, umfassend:
- ein Getriebe zum Bewegen des Transportwagens (122) zwischen Ebenen (104):
- ein Vakuumsystem (128):
- ein bewegliches Gestell (140) über jeder der Ebenen (104), wobei die beweglichen Gestelle (140) so konfiguriert sind, dass sie mindestens eines von Klimaregelung, Ernährungsregelung, Bewässerung, Wachstumsüberwachung und Wachstumsbeleuchtung bereitstellen; und/oder
- ein Antriebssystem (120), das Förderbänder (106) der Ebenen (104) mindestens einzeln antreibt.

4. Pflanzenzuchtsystem (100) nach einem der vorhergehenden Ansprüche, wobei der Rahmen (102) einen oder mehrere Stopper (124) umfasst, so dass ein Austreten von Flüssigkeit oder Feststoffen aus dem Längsträger (108) verhindert wird oder unterschiedliche auf dem Förderband (106) gewachsene Feldfrüchte getrennt werden.

5. Pflanzenzuchtsystem (100) nach einem der vorhergehenden Ansprüche,
wobei jede Ebene (104) Verschlüsse (126) auf allen Seiten der Ebene (104) und an den Enden umfasst, um eine Klimasteuerung für auf der Ebene (104) angebaute Feldfrüchte zu ermöglichen.

6. Transportwagen (122) für ein Pflanzenzuchtsystem (100) nach einem der Ansprüche 1 bis 5,
wobei der Transportwagen (122) eine Stützstruktur zum Tragen des Transportwagens (122) über einem Förderband (106) umfasst und der Transportwagen (122) einen ersten Behälter für Samen und einen zweiten Behälter für Wachstumsmedium umfasst, wobei der erste Behälter eine erste Zuführanordnung umfasst, die konfiguriert ist, um Samen, gesteuert durch die Bewegung des Förderbands (106), auf das Förderband (106) zu säen, und der zweite Behälter eine zweite Zuführanordnung umfasst, die so konfiguriert ist, dass sie, gesteuert durch die Bewegung des Förderbands (106), Wachstumsmedium auf dem Förderband (106) zuführt; wobei die Stützstruktur des Transportwagens (122) Beine, die so angeordnet sind, dass sie von der Reling oder der Schiene des Pflanzenzuchtsystems (100) gestützt werden, die sich in einer Längsrichtung (144) des Förderbands (106) zum Unterstützen der Bewegung mindestens eines Transportwagens (122) erstrecken, und eine Erntemaschine (142) über dem Förderband (106) umfasst, und die Beine an Riemenscheiben oder Zahnräder der Reling oder der Schiene des Pflanzenzuchtsystems (100) angepasst sind, um den Transportwagen (122) in Richtung des Förderbands (106) zu bewegen.

7. Transportwagen nach Anspruch 6, umfassend mindestens ein Antriebsrad, das so angeordnet ist, dass es mit mindestens einer der Kanten des Förderbands in Kontakt kommt und die erste Zuführanordnung und die zweite Zuführanordnung basierend auf der Bewegung des Förderbands antreibt.

8. Transportwagen (122) nach Anspruch 6 oder 7, umfassend:
- ein erstes Höheneinstellsystem zum Einstellen eines Freiraums zwischen dem Transportwagen und dem Förderband (106), und/oder
ein zweites Höheneinstellsystem zum Einstellen eines freien Raums zwischen dem zweiten Behälter und dem Förderband (106) separat von dem ersten Behälter.

9. Transportwagen (122) nach einem der Ansprüche 6 bis 8, wobei
- die erste Zuführanordnung eine Samenhaltewalze, die an einem Ausgang des ersten Behälters angeordnet ist, und einen ersten Mischer umfasst, der so konfiguriert ist, dass er Samen in dem ersten Behälter der Samenhaltewalze zuführt, und/oder
die zweite Zuführanordnung einen Verschluss, der an einem Ausgang des zweiten Behälters angeordnet ist, um den Ausgang des Wachstumsmediums aus dem zweiten Behälter zu steuern, und einen zweiten Mischer umfasst, der so konfiguriert ist, dass er Wachstumsmedium innerhalb des zweiten Behälters dem Ausgang der zweiten Zuführanordnung zuführt.

10. Transportwagen (122) nach Anspruch 9, **dadurch gekennzeichnet, dass** der Ausgang des zweiten Behälters bezüglich einer Laufrichtung (146) des Förderbandes (106) in eine entgegengesetzte Richtung gerichtet ist.

11. Transportwagen (122) nach einem der Ansprüche 6 bis 10, wobei der erste Behälter in Bezug auf eine Laufrichtung (146) des Förderbands vor dem zweiten Behälter positioniert ist.

12. Erntemaschine (142) für ein Pflanzenzuchtsystem (100) nach einem der Ansprüche 1 bis 5, wobei die Erntemaschine (142) Folgendes umfasst:
- eine Messeranordnung umfassend Messer, wobei die Messeranordnung dazu konfiguriert ist, Feldfrüchte durch eine Schneidbewegung der Messeranordnung zu ernten, wobei die Schneidbewegung der Messeranordnung Folgendes aufweist
- eine entgegengesetzte Drehrichtung zu einer Drehrichtung des Förderbandes (106)
oder
- die Schneidbewegung der Messeranordnung quer zur Bewegungsrichtung des Förderbandes (106) verläuft; und Beine, die an der Reling oder der sich in einer Längsrichtung (144) des Förderbands (106) erstreckenden Schiene bewegbar sind, um die Bewegung der Erntemaschine (142) über das Förderband (106) zu unterstützen, und die Beine Räder umfassen und die Erntemaschine (142) einen Motor umfasst, der so angeordnet ist, dass er die Räder oder Riemenscheiben auf der Reling oder der Schiene antreibt.

13. Erntemaschine (142) nach Anspruch 12, umfassend einen Aufnahmekanal für Erntegut und ein Vakuumsystem (128), das über ein flexibles Rohr mit dem Aufnahmekanal verbunden ist, um das Erntegut aus dem Aufnahmekanal aufzunehmen.

14. Erntemaschine (142) nach Anspruch 12 oder 13, umfassend ein Hebesystem zum Einstellen der Höhe der Erntemaschine (142) vertikal in Bezug auf das Förderband (106) und/oder Bewegen der Erntemaschine (142) zwischen Ebenen (104) des Pflanzenzuchtsystems (100) .

15. Erntemaschine (142) nach einem der Ansprüche 12 bis 14,
wobei die Erntemaschine (142) ein Steuersystem umfasst, das einen Computerprogrammcode umfasst, der bei Ausführung durch das Steuersystem bewirkt, dass die Erntemaschine (142) mindestens eines der folgenden ausführt:
- Einstellen von Freiraum zwischen der Erntemaschine (142) und dem Förderband (106),
- Starten eines Vakuumsystems (128), das über ein flexibles Rohr mit einem Aufnahmekanal verbunden ist, zum Aufnehmen von Erntegut aus dem Aufnahmekanal,
- Antreiben auf dem Förderband (106) zum Ernten von Erntegut.

## Revendications

1. Système de culture de plantes (100), comprenant :
- un cadre (102) comprenant deux niveaux ou plus (104) pour les plantes cultivées, dans lequel les niveaux (104) sont empilés l'un sur l'autre et
- un support mobile (140) au-dessus de chacun des niveaux (104), dans lequel les supports mobiles (140) sont configurés pour fournir au moins l'un parmi le contrôle du climat, le contrôle de la nutrition, l'irrigation, le suivi de la croissance et des lampes de culture pour les plantes cultivées sur les niveaux respectifs (104) et les supports mobiles (140) sont mobiles à différentes hauteurs entre les niveaux empilés (104) ; **caractérisé en ce que** chaque niveau (104) comprend une bande transporteuse (106) et chacun des niveaux (104) comprend des rails ou une piste s'étendant dans une direction longitudinale (144) de la bande transporteuse (106) pour soutenir le déplacement d'au moins un parmi un chariot (122) et une moissonneuse (142) sur la bande transporteuse (106), et le cadre (102) comprend un système de réglage (118) relié aux niveaux (104) et au cadre (102) pour le réglage des positions des niveaux (104) dans le cadre (102) ; et **en ce que** les rails ou la piste comprennent des poulies ou des engrenages pour soutenir le déplacement d'au moins un parmi le chariot (122) et la moissonneuse (142) sur la bande transporteuse (106) .

2. Système de culture de plantes (100) selon la revendication 1, dans lequel chaque niveau (104) comprend : une bande transporteuse (106) et un support longitudinal (108) s'étendant le long de la bande transporteuse (106) entre une surface supérieure (110) et une surface inférieure (112) de la bande transporteuse (106), et le support longitudinal (108) a un profil dévié vers le bas entre les bords (114) pour soutenir une partie centrale (115) de la bande transporteuse (106) comprenant une couche de croissance (116) entre les bords (114), et au moins l'une des parties de bord de la bande transporteuse (106) est exempte de milieu de culture, de graines et/ou de plantes.

3. Système de culture de plantes (100) selon l'une quelconque des revendications précédentes, comprenant :
- un engrenage pour déplacer le chariot (122) entre les niveaux (104) ;
- un système de vide (128) ;
- un support mobile (140) sur chacun des niveaux (104), dans lequel les supports mobiles (140) sont configurés pour fournir au moins l'un parmi le contrôle du climat, le contrôle de la nutrition, l'irrigation, le suivi de la croissance et des lampes de culture ; et/ou
- un système d'entraînement (120) configuré pour entraîner des bandes transporteuses (106) des niveaux (104) au moins une à la fois.

4. Système de culture de plantes (100) selon l'une quelconque des revendications précédentes, dans lequel le cadre (102) comprend un ou plusieurs bouchons (124) de manière à empêcher l'évacuation de liquide ou de solides du support longitudinal (108) ou à séparer les différentes plantes cultivées sur la bande transporteuse (106).

5. Système de culture de plantes (100) selon l'une quelconque des revendications précédentes, dans lequel chaque niveau (104) comprend des fermetures (126) sur tous les côtés du niveau (104) et aux extrémités, pour permettre le contrôle du climat pour les plantes cultivées sur le niveau (104).

6. Chariot (122) pour un système de culture de plantes (100) selon l'une quelconque des revendications 1 à 5, dans lequel le chariot (122) comprend une structure de support pour soutenir le chariot (122) sur une bande transporteuse (106) et le chariot (122) comprend un premier récipient pour les graines et un second récipient pour le milieu de culture, dans lequel le premier récipient comprend un premier dispositif d'alimentation configuré pour semer des graines, commandé par le déplacement de la bande transporteuse (106), sur la bande transporteuse (106) et le second récipient comprend un second dispositif d'alimentation configuré pour alimenter, commandé par le déplacement de la bande transporteuse (106), le milieu de culture sur la bande transporteuse (106) ; dans lequel la structure de support du chariot (122) comprend des pieds disposés pour être soutenus par les rails ou la piste du système de culture des plantes (100) s'étendant dans une direction longitudinale (144) de la bande transporteuse (106) pour soutenir le déplacement d'au moins l'un parmi un chariot (122) et une moissonneuse (142) au-dessus de la bande transporteuse (106) et les pieds sont adaptés à des poulies ou à des engrenages des rails ou de la piste du système de culture de plantes (100) pour déplacer le chariot (122) dans la direction de la bande transporteuse (106) .

7. Chariot selon la revendication 6, comprenant au moins une roue motrice disposée pour entrer en contact avec l'au moins un des bords de la bande transporteuse et entraîner le premier dispositif d'alimentation et le second dispositif d'alimentation en fonction du déplacement de la bande transporteuse.

8. Chariot (122) selon la revendication 6 ou 7, comprenant :
- un premier système de réglage de la hauteur pour régler un espace libre entre le chariot et la bande transporteuse (106), et/ou
un second système de réglage de la hauteur pour régler un espace libre entre le second récipient et la bande transporteuse (106) séparément du premier récipient.

9. Chariot (122) selon l'une quelconque des revendications 6 à 8, dans lequel
- le premier dispositif d'alimentation comprend un rouleau de maintien des graines disposé à une sortie du premier récipient et un premier mélangeur configuré pour alimenter en graines le rouleau de maintien des graines à l'intérieur du premier récipient, et/ou
le second dispositif d'alimentation comprend un obturateur disposé à une sortie du second récipient pour commander la sortie du milieu de culture à partir du second récipient et un second mélangeur configuré pour alimenter le milieu de culture à l'intérieur du second récipient jusqu'à la sortie du second dispositif d'alimentation.

10. Chariot (122) selon la revendication 9, dans lequel la sortie du second récipient est dirigée dans une direction opposée par rapport à une direction de déplacement (146) de la bande transporteuse (106).

11. Chariot (122) selon l'une quelconque des revendications 6 à 10, dans lequel le premier récipient est placé avant le second récipient par rapport à une direction de déplacement (146) de la bande transporteuse.

12. Moissonneuse (142) pour un système de culture de plantes (100) selon l'une quelconque des revendications 1 à 5, dans laquelle la moissonneuse (142) comprend :
- un agencement de lames comprenant des lames, dans laquelle l'agencement de lames est configuré pour moissonner des récoltes par un mouvement de coupe de l'agencement de lames, dans laquelle le mouvement de coupe de l'agencement de lames a
- une direction de rotation opposée à une direction de rotation de la bande transporteuse (106)
ou
- le mouvement de coupe de l'agencement de lames a une direction transversale par rapport à la direction de déplacement de la bande transporteuse (106) ; et des pieds adaptés mobiles sur les rails ou la piste s'étendant dans une direction longitudinale (144) de la bande transporteuse (106) pour soutenir le déplacement de la moissonneuse (142) sur la bande transporteuse (106) et les pieds comportent des roues et la moissonneuse (142) comprend un moteur disposé pour entraîner les roues ou des poulies sur les rails ou la piste.

13. Moissonneuse (142) selon la revendication 12, comprenant une goulotte de réception des récoltes et un système de vide (128) relié à la goulotte de réception par un tuyau flexible pour recevoir les récoltes depuis la goulotte de réception.

14. Moissonneuse (142) selon la revendication 12 ou 13, comprenant un système de levage pour le réglage vertical de la hauteur de la moissonneuse (142) par rapport à la bande transporteuse (106) et/ou le déplacement de la moissonneuse (142) entre les niveaux (104) du système de culture des plantes (100).

15. Moissonneuse (142) selon l'une quelconque des revendications 12 à 14, dans laquelle la moissonneuse (142) comprend un système de commande comprenant un code de programme informatique qui, lorsqu'il est exécuté par le système de commande, entraîne l'exécution par la moissonneuse (142) d'au moins l'une des opérations suivantes :
- réglage de l'espace libre entre la moissonneuse (142) et la bande transporteuse (106),
- démarrage d'un système de vide (128) relié à une goulotte de réception par un tuyau flexible pour recevoir les récoltes à partir de la goulotte de réception,
- engrenage au-dessus de la bande transporteuse (106) pour les récoltes.
